# EUROPÄISCHE PATENTANMELDUNG

(11) **EP 1 911 634 A1**
(43) Veröffentlichungstag der Anmeldung: **16.04.2008**
(21) Anmeldenummer: 07117598.8
(22) Anmeldetag: 01.10.2007
(51) Int. Cl.: B60R 21/13

(54) **Überrollschutzsystem für Kraftfahrzeuge mit mindestens einem aktiv aufstellbaren Überrollbügel**

(30) Priorität: 10.10.2006 DE 102006048085
(71) Anmelder: Automotive Group ISE Innomotive Systems Europe GmbH, 51702 Bergneustadt (DE)
(72) Erfinder: LIESAUS, Frank, 51702, Bergneustadt (DE); MENNE, Hans Gerd, 51702, Bergneustadt (DE)
(74) Vertreter: Fuchs

(57) **Zusammenfassung**

Die Erfindung geht aus von einem Überrollschutzsysteme für Kraftfahrzeuge mit mindestens einem Überrollbügel, der mittels seiner Bügelschenkel (5) in einer fahrzeugfesten führenden Halterung (2) aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte, stützende Stellung bringbar ist.

Durch die Verwendung eines einstückigen Ausgangsmaterials kann eine besonders kostengünstige, hochwirksame, die Fahrzeugkarosse verstärkende fahrzeugfeste führende Halterung (2) hergestellt werden, die den aufstellbaren Überrollbügel (3) aufnimmt.

## Beschreibung

Die Erfindung bezieht sich auf Überrollschutzsysteme für Kraftfahrzeuge mit mindestens einem sensorgesteuert aus einer Ruhelage in eine Stützposition aufstellbaren Überrollbügel, der mittels seiner Bügelschenkel, welche über ein Bügel-Querjoch miteinander verbunden sind, in korrespondierenden Halter-Schenkeln einer fahrzeugfesten führenden Halterung aufgenommen sind, wobei die Schenkel der Halterung mindestens über ein oberes Halter-Querjoch miteinander verbunden sind.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest installierten Überrollbügel vorzusehen (EP 0 233 777 B2) oder jedem Fahrzeugsitz einen höhenunveränderlich fest installierten Überrollbügel (DE 196 04 423 A1) zuzuordnen. Neben diesen sogenannten starren Überrollbügeln sind auch weit verbreitet konstruktive Lösungen für sogenannte aktive Überrollbügelsysteme im Markt, bei denen der Überrollbügel im Normalzustand abgelegt ist, und im Gefahrenfall, also bei einem drohenden Überschlag, sensorgesteuert mittels eines Energiespeichers schnell in eine schützende verriegelte Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.

Eine derartige Kassetten-Konstruktion eines aktiven Überrollbügelschutzsystems zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für die Bügelschenkel von zwei nebeneinander angeordneten U-förmigen Überrollbügeln aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern. Es ist dabei auch bekannt, zwei Kassettensysteme mit jeweils einem aktiven Überrollbügel an einem Rückwandträger zu integrieren (DE 100 44 926 C1).

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale ausgebildet sein (DE 195 40 819 C2), oder kann im Bereich der Fahrzeugsitze bügelkopfartige Ausformungen aufweisen (DE 100 44 930 C1).

Die DE 41 00 506 C1 zeigt einen fahrzeugbreiten ausfahrbaren Überrollbügel, der in einem viereckig geschlossenen starren Führungsrahmen aufgenommen ist. Der Führungsrahmen wird durch eine Vielzahl von einzelnen Elementen zusammengesetzt. Neben der Vielzahl von Einzelbauteilen weist die bekannte Konstruktion den Nachteil auf, dass keine Durchlademöglichkeit gegeben ist.

Die DE 10 2004 035 015 B3 zeigt ein Überrollschutzsystem, das u.a. aus einem fahrzeugsitzbezogenen Überrollkörper ohne sensorgesteuerten Crash-Antrieb gebildet wird. Dieses System besteht, wie schon die DE 41 00 506 C1, aus mehreren Teilen, so bedarf es einer separaten Traverse, die mit ihren seitlichen Enden geführt in den am Führungsblock befestigten Seitenteilen aufgenommen wird, um ein Verstellen des Überrollkörpers überhaupt zu ermöglichen.

Der Erfindung liegt die Aufgabe zugrunde, das eingangs bezeichnete Überrollschutzsystem so auszubilden, dass die fahrzeugfeste führende Halterung so gestaltet ist, dass sie mit einfachen Mitteln kostengünstig herzustellen ist und dabei fahrzeugversteifend wirkt.

Die Lösung dieser Aufgabe gelingt bei Überrollschutzsystemen für Kraftfahrzeuge mit mindestens einem sensorgesteuert aus einer Ruhelage in eine Stützposition aufstellbaren Überrollbügel, der mittels seiner Bügelschenkel, welche über ein Bügel-Querjoch miteinander verbunden sind, in korrespondierenden Halter-Schenkeln einer fahrzeugfesten führenden Halterung aufgenommen sind, wobei die Halter-Schenkel der Halterung mindestens über ein oberes Halter-Querjoch miteinander verbunden sind, gemäß der Erfindung dadurch, dass die Halter-Schenkel und das Halter-Querjoch der fahrzeugfesten führenden Halterung einteilig miteinander verbunden sind.

Die erfindungsgemäßen Maßnahmen, welche auf dem Konstruktionsprinzip der bereits oben erwähnten DE 41 00 506 C1 aufbauen, jedoch deren Nachteile vermeiden, führen mit Vorteil zu einer kostengünstig herstellbaren Halterung des Überrollschutzsystems.

Gerade in der Automobil-Zulieferindustrie besteht ein enormer Kostendruck, welcher einfache, wenig aufwendige und dennoch hochwirksame Konstruktionen erfordert.

Die erfindungsgemäße fahrzeugfeste führende Halterung für ein Überrollschutzsystem ist einteilig aufgebaut, wobei hier unter einteilig verstanden wird, dass das Ausgangsmaterial einstückig ist, also nicht durch mehrere Bauteile zusammengesetzt wird. Dies wird vorteilhaft erreicht, wenn es sich bei dem Ausgangsmaterial um eine Platine handelt, die durch verschiedene Umform- und Stanzprozesse zum Fertigprodukt geformt wird. Aber auch Ausgangsmaterialien wie ein Rohr, das nicht zwingend einen kreisförmigen Querschnitt aufweisen muss, sondern auch davon abweichende Geometrien haben kann, können Verwendung finden. Ferner können als Ausgangsmaterial Strangpressprofile mit den unterschiedlichsten Querschnitten, mit und ohne angeformten Stegen zur Befestigung an der Karosse oder zur Befestigung weitere Bauteile verwendet werden. Bei den Profilen kann es sich um Vollprofile, Halbhohlprofile oder auch um Hohlprofile handeln.

Zur Herstellung der fahrzeugfesten führenden Halterung können grundsätzlich beliebige Materialien verwendet werden, die die erforderlichen Festigkeitseigenschaften erfüllen. So kommen z.B. Stahl, Kunststoff, insbesondere faserverstärkter Kunststoff und Aluminium in betracht.

Die erfindungsgemäße fahrzeugfeste führende Halterung für ein Überrollschutzsystem bietet die Möglichkeit, alle für die Funktion des aktiven Überrollschutzsystems erforderlichen Bauteile zu integrieren, wie die Auslöseeinheit, die Haltevorrichtung zum Niederhalten des Überrollbügels im Grundzustand, die Führung des ausfahrbaren Teiles des Überrollschutzsystems und die Verriegelungseinheit zum Sperren des aufgestellten Überrollbügels.

Diese Bauteile oder Module können im Nachhinein eingesetzt werden, d.h. wenn die fahrzeugfeste führende Halterung bereits Bestandteil der Rohkarosse ist. Die Bauteile oder Module können aber auch bereits Bestandteil des an die Montagelinie gelieferten Überrollschutzsystems sein, so dass das gesamte Überrollschutzsystem als bereits in sich funktionierendes System angeliefert wird.

Durch neue Technologien ist es möglich geworden, den erfindungsgemäßen Gegenstand gerade in den Eckbereichen so zu Formen, dass es dort nicht zu Rissbildungen kommt.

Besonders vorteilhaft ist das große Raumangebot, das zwischen den Halter-Schenkeln der fahrzeugfesten führenden Halterung entsteht. Hier kann der zur Verfügung stehende Raum als Durchlademöglichkeit genutzt werden. Besonders viel Platz steht bei den nahezu fahrzeugbreiten Systemen zur Verfügung, aber auch bei sitzbezogenen Bügeln wird Platz geschaffen für Durchlademöglichkeiten.

Bei dem erfindungsgemäßen Gegenstand treten keine Schwachstellen auf, wie dies zwangsläufig bei mehrstückigen Profilen der Fall ist, insbesondere in den Verbindungsbereichen, wo Lochleibung auftreten kann oder es zu Materialschwächungen durch Schweiß- und/oder Lötprozessen kommt.

Durch die erfindungsgemäße Ausgestaltung kommt es zur Verstärkung der Karosse in den Hauptbelastungsrichtungen im verunfallten Fahrzeug. So können die Enden der in Richtung Fahrzeugboden weisenden Halter-Schenkel direkt mit dem Fahrzeugboden verbunden werden, so das ein geschlossener "Käfig" entsteht, der eine entsprechende Verstärkung der Karosse darstellt. Dieser "Käfig" hat durch die einstückige Gestaltung des erfindungsgemäßen Gegenstands lediglich die Befestigungspunkte zum Wagenboden als Schwachpunkt, ansonsten handelt es sich um einen einstückigen sehr stabilen "Käfig". Die Halter-Schenkel können ferner im Bereich der tragenden Elemente im Fahrzeugseitenbereich befestigt werden, ebenso kann eine Verbindung mit Fahrzeugelementen erfolgen, die ihre Erstreckung in Fahrzeuglängsachse haben und mit einem Ende im Bereich des erfindungsgemäßen Gegenstands enden. Somit ist eine Fixierung in allen drei Fahrzeughauptachsen gegeben.

Entsprechende Ausgestaltungen und Weiterbildungen der Erfindung sind in Unteransprüchen gekennzeichnet und ergeben sich auch aus der folgenden Figurenbeschreibung.

Anhand von zwei in den Patentzeichnungen in verschiedenen Ansichten und Zuständen dargestellten vorteilhaften Ausführungsbeispielen wird die Erfindung näher erläutert.

Es zeigen:
- Fig.1: in einer Frontansicht ein Überrollschutzsystem mit einer sich über nahezu die Wagenbreite erstreckenden fahrzeugfesten führenden Halterung mit einem aktiv aufstellbaren Überrollbügel in abgelegter Position,

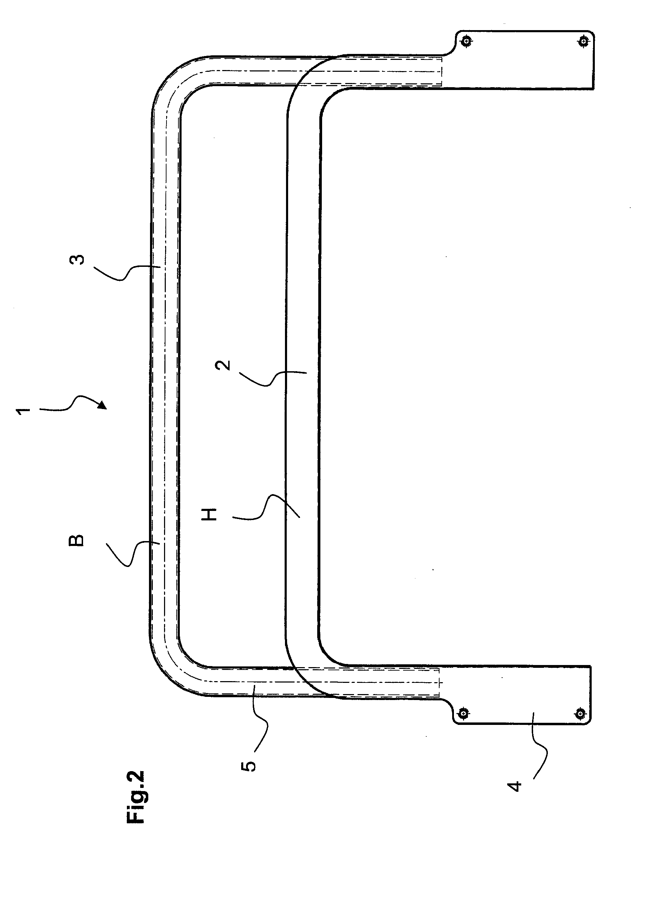

- Fig.2: eine Frontansicht entsprechend Fig.1, jedoch mit aufgestelltem Überrollbügel,
- Fig.3: eine Fahrzeuglängsschnittdarstellung gemäß Fig.1,
- Fig.4: in einer Frontansicht ein Überrollschutzsystem mit einer sich über nahezu die Wagenbreite erstreckenden fahrzeugfesten führenden Halterung jedoch mit zwei aktiv aufstellbaren Überrollbügel in abgelegter Position,
- Fig.5: eine Frontansicht entsprechend Fig. 4, jedoch mit zwei aufgestellten Überrollbügeln, und
- Fig.6: eine isometrische Ansicht des Systems entsprechend Fig.5.

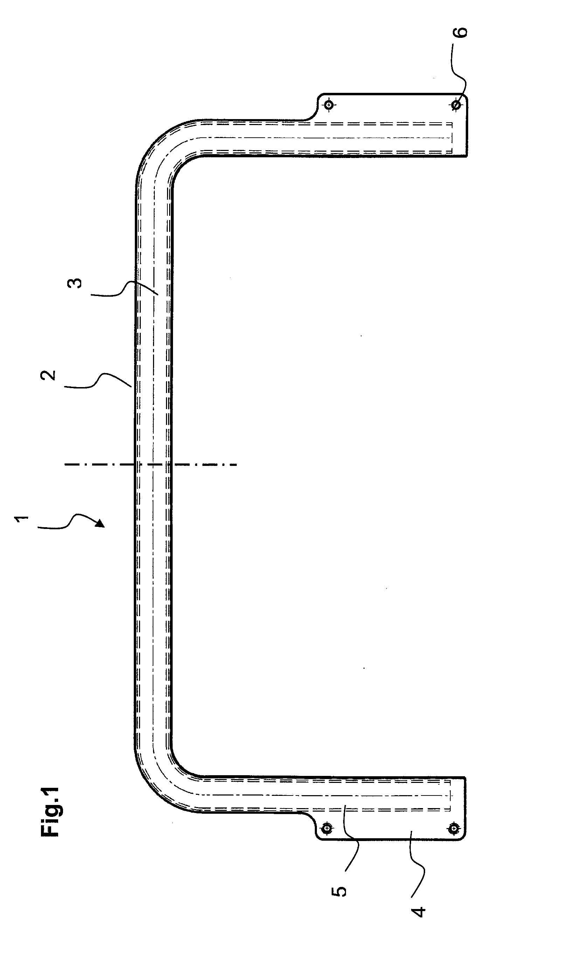

Die Fig.1 zeigt in einer stark schematisierten Darstellung ein nahezu fahrzeugbreites Überrollschutzsystem 1, hierbei befindet sich der aufstellbare Überrollbügel 3 in der fahrzeugfesten führenden Halterung 2 in abgelegter Stellung.
Die für die Funktion des aktiven Überrollschutzsystems erforderlichen Bauteile wie die Auslöseeinheit, die Haltevorrichtung für den abgelegten Überrollbügel und die Verriegelungseinheit für den aufgestellten Überrollbügel sind nicht dargestellt, jedoch aus einschlägigen Schutzrechtsschriften, insbesondere der Anmelderin, hinlänglich bekannt.

Bei dem aufstellbaren Überrollbügel 3 handelt es sich, in Fahrzeuglängsrichtung gesehen, um ein in etwa U-förmig geformtes Profil mit geführten Bügelschenkeln 5, die über ein Bügel-Querjoch B miteinander verbunden sind.

Die fahrzeugfeste führende Halterung 2 ist von der Grundform ebenfalls U-förmig, weist jedoch im Bereich ihrer Halter-Schenkel 4 eine Verbreiterung gegenüber dem übrigen Profi auf. Dies ist besonders vorteilhaft, um die Auslöseeinheit, die Haltevorrichtung und die Verriegelungseinheit aufzunehmen. Ferner kann die Verbreiterung der Halter-Schenkel 4 in ergänzender Weise dazu genutzt werden, um die fahrzeugfeste führende Halterung 2 an der Karosse über Befestigungslöcher 6 oder auch über Befestigungsbolzen zu befestigen.

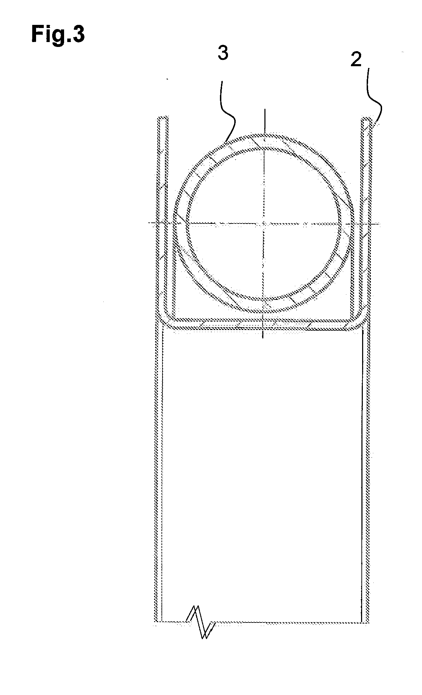

Der Querschnitt in Fig.3 durch das die beiden Halter-Schenkel 4 der Halterung 2 verbindende Profil zeigt die U-Form des Profils mit dem darin in abgelegter Position liegenden aufstellbaren Überrollbügel 3.
Der Querschnitt des Profils des Überrollbügels 3 muss nicht zwingend kreisförmig sein; er kann auch eine andere Ausgestaltung aufweisen.

Auch der Querschnitt der fahrzeugfesten führenden Halterung 2 kann deutlich von der dargestellten Form abweichen. So ist es z.B. vorstellbar, dass es sich um ein gänzlich geschlossenes Profil handelt und lediglich die Bereiche, an denen die Bügelschenkel 5 des aufstellbaren Überrollbügels 3 austreten, geöffnet sind. Hierdurch würde in vorteilhafter Weise die Fahrzeugkarosse verstärkt. Bei dieser Ausführungsform würde dann der aufstellbare Überrollbügel 3 mit seinem die Bügelschenkel 5 verbindenden Bügel-Querjoch B oberhalb des die beiden Halter-Schenkel 4 der fahrzeugfesten führenden Halterung 2 verbindenden Profils sitzen.

Als vorteilhaft erweist es sich, wenn das Profil der fahrzeugfesten führenden Halterung 2 teilweise geschlossen und teilweise geöffnet ist. So kann der die beiden Halter-Schenkel 4 verbindende Profilabschnitt geöffnet und der Profilabschnitt im Bereich der Halter-Schenkel 4 zumindest teilweise geschlossen sein, was den Vorteil hat, dass der aufstellbare Überrollbügel 3 sich mit seiner Quererstreckung innerhalb der fahrzeugfesten führenden Halterung 2 befindet.

Es erweist sich als besonders vorteilhaft, wenn es sich bei der fahrzeugfesten führenden Halterung 2 um ein Strangpressprofil handelt, an dem, je nach den Bedürfnissen, Stege mit angeformt sind, an denen diverse Anbauteile befestigt werden können oder die zur Befestigung an der Fahrzeugkarosse dienen. So kann es sich beispielsweise um Aluminium-Strangpressprofile handeln oder auch um Profile, die im Innenhochdruckverfahren oder durch Warmumformung hergestellt werden.

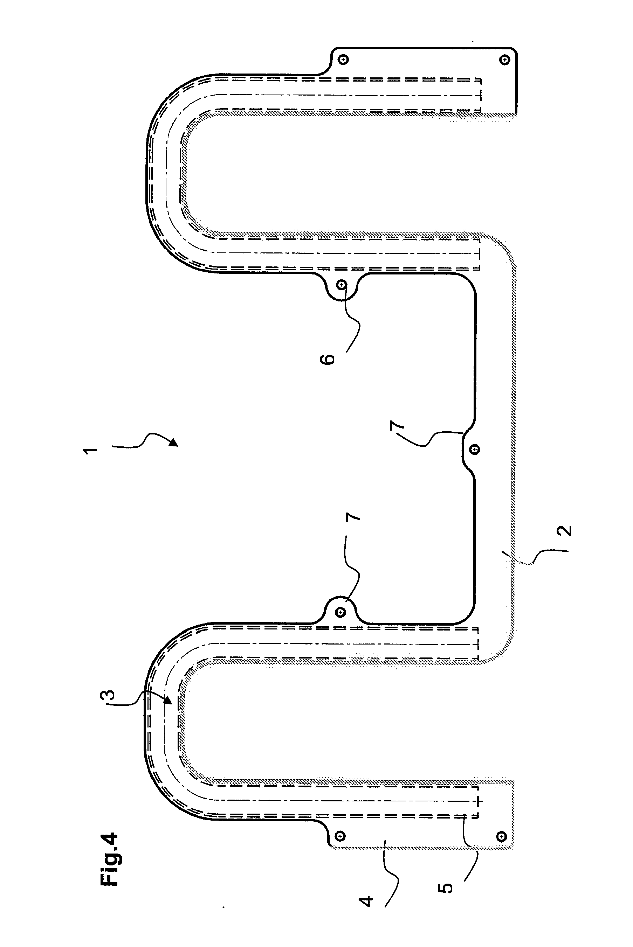

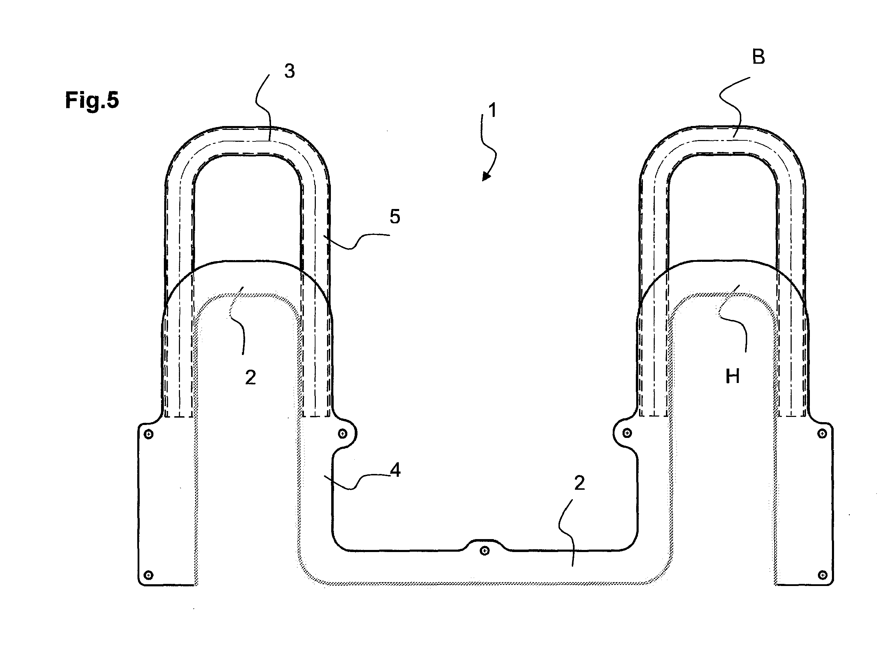

Die Figuren 4,5 und 6 zeigen eine zweite Ausführungsform eines aktiven Überrollschutzsystems 1. Hierbei handelt es sich um ein System mit zwei separat aufstellbaren Überrollbügeln 3.
Die Profilform der aufstellbaren Überrollbügel 3 kann, wie bereits oben erwähnt, auch bei dieser Ausführungsform von einer Kreisform abweichen.

Bei der fahrzeugfesten führenden Halterung 2 handelt es sich, in Fahrtrichtung gesehen, um ein Doppel U-förmiges Profil. Auch hier zeigt sich im Bereich der Halter-Schenkel 4 eine Verbreiterung, um, wie bereits beschrieben, diverse Anbauteile aufnehmen zu können und um das Überrollschutzsystem 1 an der Fahrzeugkarosse über Befestigungslöcher 6 bzw. über Befestigungsbolzen befestigen zu können.

Im mittleren Bereich der fahrzeugfesten führenden Halterung 2 sind Flansche 7 angeformt. Diese dienen einerseits zur Aufnahme der Befestigungslöcher 6 oder der Befestigungsbolzen um das Überrollschutzsystem 1 an der Fahrzeugkarosse befestigen zu können und andererseits können hieran weiter Bauteile befestigt werden. Die Flansche 7 sind variabel am gesamten M-förmigen Querschnitt anbringbar.

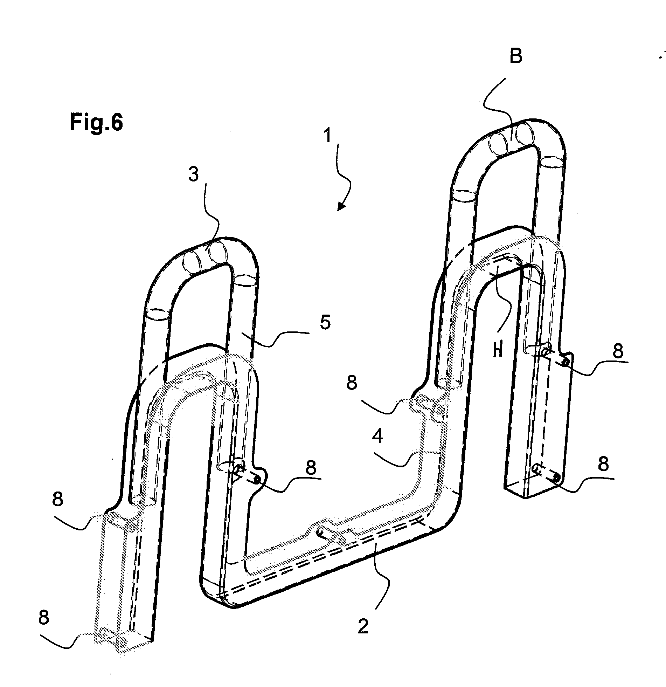

Um die fahrzeugfeste führende Halterung 2 vorteilhaft an der Karosse befestigen zu können, sind, wie die Fig.6 zeigt, zwischen dem U-förmigen Profil der Halterung 2 Verbindungsstücke 8 eingebracht. Das hat den Vorteil, dass bei der Montage die fahrzeugfeste führende Halterung 2 sehr einfach montiert werden kann, ohne zwischen das U-förmige Profil greifen zu müssen. Gleichzeitig wird die fahrzeugfeste führende Halterung 2 in ergänzender Weise verstärkt.

Sowohl für den aufstellbaren Überrollbügel 3 als auch für die fahrzeugfeste führende Halterung 2 können die unterschiedlichsten Materialien zum Einsatz kommen, je nach Vorgabe bzw. festigkeitszpezifischen Forderungen.

Ferner ist es möglich, den erfindungsgemäßen Gegenstand für zwei sitzbezogene Überrollschutzsysteme in Form von Einzelkassetten zur Verfügung zu stellen.

### Bezugszeichenliste

- 1: Überrollschutzsystem
- 2: fahrzeugfeste führende Halterung
- 3: aufstellbarer Überrollbügel
- 4: Halter-Schenkel
- 5: Bügelschenkel
- 6: Befestigungslöcher
- 7: Flansch
- 8: Verbindungsstück
- B: Bügel-Querjoch
- H: Halter-Querjoch

## Patentansprüche

1. Überrollschutzsysteme für Kraftfahrzeuge mit mindestens einem sensorgesteuert aus einer Ruhelage in eine Stützposition aufstellbaren Überrollbügel, der mittels seiner Bügelschenkel (5), welche über ein Bügel-Querjoch (B) miteinander verbunden sind, in korrespondierenden Halter-Schenkeln (4) einer fahrzeugfesten führenden Halterung (2) aufgenommen sind, wobei die Halter-Schenkel (4) der Halterung (2) mindestens über ein oberes Halter-Querjoch (H) miteinander verbunden sind, **dadurch gekennzeichnet, dass** die Halter-Schenkel (4) und das Halter-Querjoch (H) der fahrzeugfesten führenden Halterung (2) einteilig miteinander verbunden sind.

2. Überrollschutzsystem nach Anspruch 1, **dadurch gekennzeichnet, dass** die fahrzeugfeste führende Halterung (2) über Halter-Schenkel (4) verfügt, die in Richtung Fahrzeugboden gerichtet sind.

3. Überrollschutzsystem nach Anspruch 2, **dadurch gekennzeichnet, dass** die Halter-Schenkel (4) der fahrzeugfesten führenden Halterung (2) mit der Fahrzeugkarosse, diese versteifend, verbunden sind.

4. Überrollschutzsystem nach Anspruch 1 bis 3, **dadurch gekennzeichnet, dass** die fahrzeugfeste führende Halterung (2) ein Profilkörper ist.

5. Überrollschutzsystem nach Anspruch 4, **dadurch gekennzeichnet, dass** die fahrzeugfeste führende Halterung (2) durch ein Aluminium-Strangpressprofil gebildet ist.

6. Überrollschutzsystem nach Anspruch 4 und 5 **dadurch gekennzeichnet, dass** die fahrzeugfeste führende Halterung (2) aus einem Vollprofil, Halbhohlprofil oder Hohlprofil gebildet ist.

7. Überrollschutzsystem nach Anspruch 1 bis 6, **dadurch gekennzeichnet, dass** die fahrzeugfeste führende Halterung (2) zumindest teilweise Öffnungen besitzt.

8. Überrollschutzsystem nach Anspruch 1 bis 7 **dadurch gekennzeichnet, dass** die fahrzeugfeste führende Halterung (2) Flansche (7) aufweist.

9. Überrollschutzsystem nach Anspruch 1 bis 8 **dadurch gekennzeichnet, dass** die fahrzeugfeste führende Halterung (2) so ausgebildet ist, dass zwischen ihren Halter-Schenkeln (4) Freiraum vorhanden ist.

10. Überrollschutzsystem nach einem der Ansprüche 1 bis 9, **dadurch gekennzeichnet, dass** das Halter-Querjoch (H) der Halterung (2) als dachrinnenartiges Halbhohlprofil ausgebildet ist, derart, dass im Grundzustand des Überrollbügels das Bügel-Querjoch (B) der Bügelschenkel (5) in dem Halter-Querjoch (H) der Halter-Schenkel (4) aufnehmbar ist.

11. Überrollschutzsystem nach Anspruch 1 bis 9, **dadurch gekennzeichnet, dass** im Grundzustand des Überrollbügels das Bügel-Querjoch (B) der Bügelschenkel (5) oberhalb des Halter-Querjochs (H), das die Halter-Schenkel (4) verbindet, liegt.

12. Überrollschutzsystem nach einem der Ansprüche 1 bis 11, **dadurch gekennzeichnet, dass** bei einem sitzbezogenem Überrollschutzsystem zwei fahrzeugfeste führende Halterungen (2) beabstandet nebeneinander angeordnet sind, deren gegenüberliegende innere Halter-Schenkel (4) fahrzeugbodenseitig durchgehend einteilig unter Bildung eines Freiraums miteinander verbunden sind.

13. Überrollschutzsystem nach einem der Ansprüche 1 bis 12,
**dadurch gekennzeichnet, dass** der geometrische Konturverlauf des Bügel-Querjochs (B) und des Halter-Querjochs (H) aufeinander abgestimmt ist.
